# FASCICULE DE BREVET EUROPEEN

(11) **EP 2 938 665 B1**
(45) Date de publication et mention de la délivrance du brevet: **14.02.2018**
(21) Numéro de dépôt: 13824633.5
(22) Date de dépôt: 24.12.2013
(51) Int. Cl.: C08J 11/02

(54) **PROCÉDÉ DE RECYCLAGE DE POLYMÈRES ET PRODUIT ISSU DE CE PROCÉDÉ**
VERFAHREN ZUM RECYCLING VON POLYMEREN UND AUS DIESEM VERFAHREN HERGESTELLTES PRODUKT
PROCESS FOR RECYCLING OF POLYMERS AND PRODUCT OBTAINED BY SAID PROCESS

(30) Priorité: 28.12.2012 FR 1262919
(43) Date de publication de la demande: 04.11.2015
(73) Titulaire: Compagnie Plastic Omnium, 69007 Lyon (FR)
(72) Inventeur: VIOT, Fréderic, F-01450 Poncin (FR); LE BOT, Philippe, F-44600 Saint Nazaire (FR); GUENERON, François, F-71100 Chalon Sur Saone (FR)
(74) Mandataire: Remy, Vincent Noel Paul
(86) Numéro de dépôt international: PCT/FR2013/053264
(87) Numéro de publication internationale: WO 2014/102506

(56) Documents cités:
- WO-A1-2005/021625
- FR-A1- 2 864 095
- KR-B1- 100 828 146
- US-A1- 2002 169 223

## Description

La présente invention concerne un procédé de recyclage de polymères.

Le document WO-A-2005 21625 décrit un procédé similaire.

On entend par matériau « postconsommateur » selon la définition de l'article 7.8.1.1 de la norme ISO 14021 (« Marquage et déclarations environnementaux - Autodéclarations environnementales (Etiquetage de type II)»), un « matériau généré par les ménages ou par les installations commerciales, industrielles ou institutionnelles dans leur rôle d'utilisateur final du produit, et qui ne peut plus servir à l'usage pour lequel il a été conçu. Ceci comprend les retours de matériau de la chaîne de distribution». Un tel matériau se distingue d'un matériau « préconsommateur » tel que défini dans le même article de la norme, à savoir un « matériau détourné du flux des déchets pendant le processus de fabrication. »

Jusqu'à présent, les polymères obtenus à partir de matériaux « postconsommateur » ne pouvaient pas être utilisés pour la fabrication de pièces revêtues, n'acceptant pas de défauts d'aspect, ou du moins pas à fortes concentrations.

L'invention permet de résoudre ce problème.

A cet effet, l'invention a pour objet un procédé de recyclage de polymères à partir d'un broyé de matériaux «postconsommateur», selon la revendication 1. L'étape d'extraction a lieu après des étapes de tri, broyage, séparation, lavage, séchage, déjà connues pour le recyclage des matières plastiques.

Un tel procédé permet de diminuer, dans les polymères issus de matériaux « postconsommateur », la présence des polluants que représentent les composés organiques volatils (COV), dont les inventeurs ont observé qu'ils sont à l'origine de défauts d'aspect des pièces fabriquées dans ces polymères.

On connaît au moins trois textes définissant les composés organiques volatils. La directive n°1999/13/CE du Conseil européen du 11/03/1999, relative à la réduction des émissions de composés organiques volatils dues à l'utilisation de solvants organiques dans certaines activités et installations, définit un composé organique volatil comme «tout composé organique ayant une pression de vapeur de 0,01 kPa ou plus à une température de 293,15 K ou ayant une volatilité correspondante dans les conditions d'utilisation particulières».

Le Décret n°2006-623 du 29/05/2006, relatif à la réduction des émissions de composés organiques volatils dues à l'utilisation de solvants organiques dans certains vernis et peintures et dans les produits de retouche de véhicules, définit un d'ébullition initial, mesuré à la pression standard de 101,3 kPa, est inférieur ou égal à 250°C ».

La norme NF ISO 16000-6 du 05/05/2005 définit les composés organiques volatils selon leur température d'ébullition et distingue, d'après la classification adoptée par l'Organisation Mondiale de la Santé en 1989, les composés organiques semi-volatils dont le point d'ébullition se situe entre (240°C à 260°C) et (380°C à 400°C), les composés organiques volatils dont le point d'ébullition se situe entre (50°C à 100°C) et (240°C à 260°C) et les composés organiques très volatils dont le point d'ébullition se situe entre < 0°C et (50°C à 100°C). Les composés organiques volatils de la présente invention peuvent être l'un ou l'autre des composés organiques semi-volatils, composés organiques volatils et composés organiques très volatils définis dans cette norme.

Dans la présente invention, on entend par composé organique volatil un composé qui entre dans une définition selon au moins un de ces trois textes.

Ces polluants ne sont pas présents dans les polymères vierges (c'est-à-dire les polymères non issus de recyclage) mais sont fabriqués au cours de la vie du polymère sous l'action de la dégradation due au vieillissement, à la température, à la lumière et aux pollutions extérieures comme les huiles moteur ou contaminations de toute sorte. Ils peuvent être des alcanes ou des alcènes et des esters d'acides gras, ou bien encore des silicones ou huiles minérales provenant des huiles moteur. Ils sont présents non seulement en surface, mais également à coeur du polymère à recycler, piégés et/ou dissous dans l'enchevêtrement des chaînes de polymère. C'est pourquoi un simple lavage du broyé ne suffit pas à les enlever et une extraction est nécessaire.

Par ailleurs, les inventeurs ont découvert que le passage, dans les chaînes de peinture, de pièces présentant une concentration importante en polymères issus de matériaux « postconsommateur » entraîne la pollution de la chaîne de peinture. En effet, ils ont observé qu'après le passage de telles pièces, toute pièce ultérieure en matériau vierge, passant dans la chaîne de peinture, présente des défauts d'aspect. L'invention supprime cet inconvénient en préservant la chaîne de peinture de cette pollution. L'extraction des composés organiques volatils est effectuée par mise en contact du broyé avec une solution comportant au moins un agent mouillant et un agent de solubilisation des esters d'acide gras, sous une température au moins égale à 15°C en-dessous du point d'ébullition de la solution, ou préférentiellement entre 15 °C et 5°C en-dessous du point d'ébullition de la solution.

Les inventeurs ont découvert que la migration en dehors des polymères des composés organiques volatils présents en leur coeur peut être obtenue sous l'influence de trois facteurs.

Sous l'effet de la chaleur, le plastique se ramollit, autorisant la formation d'espaces entre les longues chaînes enchevêtrées de polymères qui constituent le plastique, ce qui facilite la mobilité des composés organiques volatils présents entre les chaînes de polymères.

Par sa présence, l'agent mouillant diminue la tension superficielle de la solution d'extraction, qui pénètre ainsi plus facilement entre les chaînes de polymères. Les composés organiques volatils peuvent alors être mis en contact avec la solution et être entraînés.

Enfin, la présence d'un agent de solubilisation des esters d'acides gras permet de dissoudre dans la solution ces composés qui constituent une partie des composés organiques volatils présents dans les polymères. Ces composés sont alors entraînés hors des polymères.

Il est préférable de ne pas dépasser une température supérieure à 5°C en-dessous du point d'ébullition car ces températures élevées sont associées à une forte évaporation qui oblige à renouveler la solution plus fréquemment et est responsable d'émanations en plus grande quantité.

Avantageusement, l'agent mouillant est un alcool.

Dans le procédé selon l'invention, l'alcool présente l'avantage d'augmenter la solubilité des alcanes et des alcènes dans la solution.

De préférence, l'agent mouillant est un alcool aliphatique en C1 à C5, ou préférentiellement en C1 à C3, ou encore plus préférentiellement un alcool dénaturé contenant un mélange d'alcools en C1, C2 et C3.

Ces alcools présentent l'intérêt de générer des effluents faciles à traiter, ne nécessitant, pour leur traitement qu'une éventuelle dilution. Cependant dans un mode de réalisation préféré, l'alcool utilisé comme agent mouillant devra avoir une chaîne n'excédant pas 5 atomes de carbone et présentant par conséquent une bonne solubilité dans l'eau.

De façon avantageuse, la teneur en alcool de la solution est comprise entre 4 et 25 % en volume.

Il est préférable de ne pas dépasser une teneur en alcool de 25 % en volume en raison des émanations engendrées. De plus, une teneur en alcool supérieure aurait un impact négatif sur la durée de vie des installations de production, diminuant ainsi la sécurité de ces installations. Enfin, le maintien d'une faible teneur en alcool permet de limiter les coûts associés à la mise en oeuvre du procédé. L'agent de solubilisation des esters d'acide gras est un acide ajouté à la solution pour qu'elle ait un pH supérieur ou égal à 2 et inférieur ou égal à 5, ou préférentiellement inclus entre 4 et 5.

Il est préférable de maintenir le pH de la solution à une valeur au moins égale à 2 en raisons de contraintes industrielles telles que la pérennité et la sécurité des installations.

De façon optionnelle, l'acide est choisi parmi le groupe des acides minéraux, ou préférentiellement est de l'acide chlorhydrique ou de l'acide sulfurique.

Préférentiellement, les fragments du broyé sont d'épaisseur inférieure à 5 mm et ont une surface comprise entre 1 et 4 cm².

De façon privilégiée, les composés organiques volatils à extraire sont des molécules de masse molaire inférieure à 400 g/mol.

Avantageusement, les polymères à recycler sont des polyoléfines (homopolymères ou copolymères d'oléfines), et de façon préférentielle du polypropylène.

Préférentiellement, l'extraction est effectuée sous pression atmosphérique.

De façon privilégiée, la solution est à l'état liquide.

De façon optionnelle, le polymère issu du procédé est le même que le polymère contenu dans le matériau « postconsommateur » soumis audit procédé.

L'invention a également pour objet un matériau issu du procédé décrit ci-dessus. Un autre objet de l'invention est une pièce fabriquée dans le matériau ci-dessus.

La présente invention concerne également une pièce pour véhicule automobile en polymères provenant du recyclage de polymères issus de matériaux « postconsommateur ».

On connaît de l'état de la technique des pièces pour véhicule automobile fabriquées en polymères issus de matériaux « postconsommateur ». Cependant classiquement, l'utilisation de ces polymères est limitée à la fabrication de pièces de structure, ou au moins de pièces cachées, ou sans revêtement, ou du moins ne présentant pas d'exigences d'aspect.

En revanche, l'utilisation de tels polymères pour la fabrication de pièces visibles, visibles au sens de la définition de la Directive 98/71/CE du Parlement européen et du Conseil du 13/10/1998 sur la protection juridique des dessins ou modèles, à savoir que « la pièce est visible lors d'une utilisation normale, c'est-à-dire l'utilisation par l'utilisateur final, à l'exception de l'entretien, du service ou de la réparation », lesdites pièces présentant des exigences d'aspect, se heurte, en cas d'utilisation à des taux élevés, à des problèmes de défauts d'aspect lorsque ces pièces sont peintes ou recouvertes d'un autre revêtement.

Or, une telle utilisation des polymères issus de matériaux « postconsommateur », si elle était accrue, aboutirait à une baisse du coût de production de ces pièces.

De plus, cette nouvelle destination des polymères recyclés permettrait d'augmenter les volumes globaux de plastiques recyclés et donc de tirer parti de façon plus importante des avantages du recyclage des matières plastiques, à savoir la limitation de l'utilisation des ressources naturelles que sont les combustibles fossiles et la réduction du volume des déchets plastiques, peu dégradables et responsables de pollution.

Un but de la présente invention est donc de fournir des pièces pour des véhicules automobiles, à partir de polymères issus de matériaux « postconsommateur ».

L'invention permet d'obtenir une pièce pour automobile présentant, après revêtement par de la peinture, les exigences d'aspect suivantes :
- brillant compris sous angle incident de 20° entre 65 et 90 % de lumière réfléchie,
- au maximum 4 défauts de type grains, loupes, ou particules au m², d'une taille supérieure à 50 µm,
- une tenue aux agressions extérieures définie par aucun décollement après test d'adhérence dans chacune des conditions suivantes :
   à l'état initial,
   après que la pièce a été immergée dans de l'eau déminéralisée à 40°C pendant 10 jours ou 60°C pendant 3 jours, le test de tenue aux agressions extérieures étant effectué 1 heure après avoir sorti et essuyé la pièce,
   et après exposition à une température de 85 °C pendant 7 jours, le test de tenue aux agressions extérieures étant effectué après retour à température ambiante, et
- un décollement du feuil de peinture inférieur à 2 cm² sur l'ensemble de la pièce, après que la pièce a subi un minimum de cinq incisions jusqu'au subjectile en forme de croix inscrite chacune dans un carré de 10 cm de côté et a ensuite été soumise pendant 30 secondes à un jet d'eau à 85°C émis sous une pression de 65 bars par une buse à jet plat d'un nettoyeur haute pression située à 10 cm de la pièce, le décollement de chaque croix ne devant pas excéder 1 cm²,
   la pièce étant constituée de polymères dont certains sont issus d'un broyé de matériaux « postconsommateur », caractérisée en ce que le pourcentage en masse de polymères issus d'un broyé de matériaux « postconsommateur » est supérieur ou égal à 30, ou préférentiellement supérieur ou égal à 50, ou encore plus préférentiellement égal à 100.

Les exigences d'aspect sont mesurées comme suit :
Le brillant est mesuré à l'aide d'un brillancemètre de type Microgloss 20° ou Microtrigloss de Byk Gardner, REFO 3 de Labomat Essor ou Multigloss 268 de Minolta, dans les conditions d'emploi indiquées par le constructeur. L'étalon de calibration est une plaque de verre noir opaque dont une face est plane et polie, qui doit avoir au minimum 5 mm d'épaisseur, et est accompagnée de ses propres valeurs de brillant pour l'angle de 20°, certifiées par des organismes tels que le National Research Council (NRC Canada) et le Bundesanstalt für Materialforschung und -prüfung (BAM Allemagne). La surface à mesurer est préparée par lavage à l'eau savonneuse ou à l'aide d'un produit approprié n'altérant pas la surface, rincée, essuyée et séchée. La mesure est effectuée dans un site hors de la portée d'un éclairage direct. Elle est réalisée en 4 points de la surface et dans des directions différentes ; les points de mesure les plus éloignés ne doivent pas être distants de plus de 100 mm. Dans le cas de surfaces courbes, on fait pivoter légèrement le brillancemètre de façon à obtenir la valeur maximale du point considéré, qui sera la valeur relevée pour ce point.

On considère le subjectile qui est la pièce nue de carrosserie sur laquelle on applique le revêtement et le feuil qui est la pellicule continue résultant de l'application sur le subjectile d'une ou plusieurs couches de revêtement (en général la couche primaire, la base et le vernis). Pour l'évaluation de la tenue aux agressions extérieures, le feuil de peinture est incisé jusqu'au subjectile pour former un quadrillage et l'adhérence des carrés du réseau est appréciée. Les essais sont effectués dans une pièce à une température située entre 21 °C et 25°C. L'essai doit être réalisé en trois endroits différents de l'éprouvette. Six incisions parallèles sont pratiquées, suivies de six incisions chevauchant les incisions initiales à 90°. L'espacement des incisions doit être le suivant :
- 1 mm pour une laque monocouche ou sans apprêt,
- 2 mm pour une peinture primaire,une base et un vernis,
- 1 mm pour les pièces intérieures dont l'épaisseur du revêtement est inférieure à 60 µm,
- 2 mm pour les pièces intérieures dont l'épaisseur du revêtement est supérieure ou égale à 60 µm.

L'éprouvette est ensuite légèrement brossée. Du ruban adhésif présentant une adhésivité comprise entre 600 g/cm et 750 g/cm (selon la norme NF EN 1939) est ensuite utilisé. Le centre du ruban adhésif est placé sur le quadrillage, parallèlement à l'une des directions d'incision, et on le fait adhérer sur le quadrillage et autour sur une longueur d'au moins 20 mm, en le lissant avec l'arête arrondie d'une pièce en bois. Le temps d'adhésion est au moins d'une minute. Dans les cinq minutes qui suivent l'application du ruban adhésif, celui-ci est retiré en prenant l'extrémité libre et en arrachant rapidement, en 0,5 à 1 seconde, sous un angle aussi proche que possible de 60°.

La fabrication de telles pièces permet d'augmenter la proportion de polymères issus de matériaux « postconsommateur » dans les pièces automobile.

En effet, les inventeurs ont constaté que dans des pièces revêtues, utilisant des polymères issus de matériaux « postconsommateur » à raison de 30 % ou plus, on détecte des défauts d'aspect dus à la présence de corps étrangers, de paillettes et de corps infondus. En particulier, les défauts d'aspect suivants sont ainsi définis :
- les grains sont des défauts dus à des petites poussières qui se retrouvent à la surface du polymère injecté qui, soit restent à la surface du subjectile, soit se déposent entre deux couches successives du feuil et créent un défaut d'aspect par déformation de celui-ci, soit se déposent sur la dernière couche du feuil de peinture,
- les loupes sont des défauts dus à une diminution locale d'épaisseur du feuil de peinture ; cette diminution reflète une pollution à la surface du subjectile qui change la tension superficielle du polymère et empêche un bon étalement de la peinture,
- les particules sont dues à la présence d'impuretés solides qui sont incompatibles avec le polymère injecté et créent des défauts d'aspect par déformation de la surface du subjectile et donc du feuil de peinture.

En particulier, la densité maximale de défauts acceptée dans les zones d'aspect des pièces visibles est de 3 défauts au m².

Les zones d'aspect sont les zones des faces visibles des pièces visibles par un observateur de taille adulte se tenant debout à côté du véhicule qui sont caractérisées par le fait qu'elles ont une surface plane ou convexe avec un rayon de courbure supérieur à 500 mm.

De façon optionnelle, la pièce est une pièce de carrosserie.

Le tableau 1 montre l'incidence du pourcentage de polymères issus d'un broyé de matériaux « postconsommateur » sur l'aspect de pièces pour automobile. Il montre également l'incidence du traitement par le procédé de recyclage sur l'aspect de ces mêmes pièces. Ces données d'aspect représentent la synthèse des valeurs obtenues sur plusieurs centaines de pièces pour automobile en polypropylène. Toutes les mesures de données d'aspect ont été effectuées selon les méthodes précédemment décrites.

**Tableau 1**

| **Matériau** | **Brillant** (pourcentage de lumière réfléchie sous angle incident de 20°) | **Nombre de défauts** (grains, loupes, particules) de surface inférieure à 1mₘ2/ / m² | **Nettoyeur haute pression** | | **Décollement après test d'adhérence** | | | **Pollution de la chaîne de peinture** |
|---|---|---|---|---|---|---|---|---|
| | | | **Surface totale décollée sur l'ensemble des 5 croix** (cm²) | **Plus grande surface décollée sur une croix** (cm²) | **Etat initial** | **Immersion dans l'eau** | **Exposition à la chaleur** | |
| 30 % de polypropylène recyclé, non traité | 65 à 80 | 5 à 6 | 2 à 3 | 1,5 | non | non | non | oui |
| 30 % de polypropylène recyclé, traité | 65 à 90 | ≤4 | <2 | ≤1 | non | non | non | non |
| 100 % de polypropylène recyclé, non traité | 65 à 70 | 5à8 | 2à4 | 1,5 | non | oui, parfois | non | oui |
| 100 % de polypropylène recyclé, traité | 65 à 90 | ≤4 | <2 | ≤1 | non | non | non | non |

En première ligne sont indiquées les données d'aspect de pièces contenant 30 % de polypropylène recyclé, c'est-à-dire issu d'un broyé de matériaux « postconsommateur », n'ayant pas subi une extraction des polluants selon l'invention. Dans cet exemple, les données de brillant, tenue aux agressions extérieures (décollement après test d'adhérence) sont conformes aux exigences d'aspect que l'on cherche à atteindre grâce à l'invention. En revanche, la densité de défauts (grains, loupes ou particules) est supérieure à la densité acceptée (supérieure à 4 défauts / m²) et le décollement du feuil de peinture après que la pièce a été soumise à un nettoyeur haute pression est supérieur au décollement accepté, en surface décollée sur l'ensemble des croix et en surface décollée sur au moins une des croix. On constate également que la chaîne de peinture est polluée.

Ces résultats sont différents de ceux obtenus pour d'autres pièces (ligne 2) contenant également 30 % de polypropylène recyclé ayant subi une extraction des polluants selon l'invention. Les données d'aspect recensées pour ces pièces sont conformes aux exigences d'aspect que l'on cherche à atteindre grâce à l'invention. De plus, le passage sur la chaîne de peinture de ces pièces n'a pas entraîné de pollution de la chaîne.

En troisième ligne sont indiquées les données d'aspect de pièces constituées entièrement de polypropylène recyclé n'ayant pas subi une extraction des polluants selon l'invention. Dans cet exemple, les données d'aspect ne sont pas conformes aux exigences d'aspect que l'on cherche à atteindre grâce à l'invention. Enfin, la chaîne de peinture est polluée après passage de ces pièces.

En revanche, les données d'aspect recensées pour des pièces (ligne 4) constituées entièrement de polypropylène recyclé ayant subi une extraction des polluants selon l'invention sont conformes aux exigences d'aspect recherchées. De plus, le passage sur la chaîne de peinture de ces pièces n'a pas entraîné de pollution de la chaîne.

Le tableau 2 montre l'incidence de la température lors de l'extraction des polluants selon l'invention sur l'aspect de pièces pour automobile. Ces données d'aspect représentent la synthèse des valeurs obtenues sur plusieurs centaines de pièces pour automobile en polypropylène. Toutes les mesures de données d'aspect ont été effectuées selon les méthodes précédemment décrites.

**Tableau 2**

| **Matériau** | **Brillant** (pourcentage de lumière réfléchie sous angle incident de 20°) | **Nombre de défauts** (grains, loupes, particules) de surface inférieure à 1 mm² / m' | **Nettoyeur haute pression** | | **Décollement après test d'adhérence** | | | **Pollution de la chaîne de peinture** |
|---|---|---|---|---|---|---|---|---|
| | | | **Surface totale décollée sur l'ensemble des 5 croix** (cm²) | **Plus grande surface décollée sur une croix** (cm²) | **Etat initial** | **Immersion dans l'eau** | **Exposition à la chaleur** | |
| 30 % de polypropylène recyclé - extraction à 16°C en-dessous du point d'ébullition | 65 à 80 | 5à6 | >2 | 1,5 | non | non | non | oui |
| 30 % de polypropylène recyclé - extraction à 15°C en-dessous du point d'ébullition | 65 à 90 | 4 | <2 | ≤1 | non | non | non | non |
| 30 % de polypropylène recyclé - extraction à 5°C en-dessous du point d'ébullition | 65 à 90 | <4 | <2 | ≤1 | non | non | non | non |

Les données d'aspect de pièces pour automobile comprenant 30 % de polypropylène recyclé ont été recensées. Les données sont différentes en fonction de la température lors de l'extraction selon l'invention. En effet en ligne 1, à 16°C en-dessous du point d'ébullition, les exigences d'aspect ne sont pas atteintes en termes de densité de défauts et de décollement du feuil de peinture après que la pièce a été soumise à un nettoyeur haute pression. De plus, on constate une pollution de la chaîne de peinture. En revanche en lignes 2 et 3, à des températures situées respectivement 15°C et 5°C en-dessous du point d'ébullition, les données d'aspect sont conformes aux exigences.

Le tableau 3 montre l'incidence de la teneur en alcool de la solution d'extraction sur l'aspect de pièces pour automobile. Ces données d'aspect représentent la synthèse des valeurs obtenues sur plusieurs centaines de pièces pour automobile en polypropylène. Toutes les mesures de données d'aspect ont été effectuées selon les méthodes précédemment décrites.

**Tableau 3**

| **Matériau** | **Brillant** (pourcentage de lumière réfléchie sous angle incident de 20°) | **Nombre de défauts** (grains, loupes, particules) de surface inférieure à 1mm²/ m' | **Nettoyeur haute pression** | | **Décollement après test d'adhérence** | | | **Pollution de la chaîne de peinture** |
|---|---|---|---|---|---|---|---|---|
| | | | **Surface totale décollée sur l'ensemble des 5 croix** (cm²) | **Plus grande surface décollée sur une croix** (cm²) | **Etat initial** | **Immersion dans l'eau** | **Exposition à la chaleur** | |
| 30 % de polypropylène recyclé avec moins de 3% d'alcool en volume | 65 à 80 | 5à6 | >2 | 1,5 | non | non | non | oui |
| 30 % de polypropylène recyclé avec 4% d'alcool en volume | 65 à 90 | 4 | <2 | ≤1 | non | non | non | non |
| 30 % de polypropylène recyclé avec 25% d'alcool en volume | 65 à 90 | <4 | <2 | ≤1 | non | non | non | non |

Les données d'aspect de pièces pour automobile comprenant 30 % de polypropylène recyclé ont été recensées. Les données sont différentes en fonction de la teneur en alcool de la solution d'extraction. En effet en lignes 2 et 3, à respectivement 4% et 25 % d'alcool en volume, les exigences d'aspect sont atteintes. Il est à noter cependant qu'en ce qui concerne le décollement du feuil de peinture après que la pièce a été soumise à un nettoyeur haute pression, bien que celui-ci reste dans une valeur acceptable à 4% et 25 % d'alcool, la surface décollée à 4 % d'alcool est plus élevée que celle à 25 % d'alcool. En revanche, les exigences d'aspect ne sont pas atteintes en matière de densité de défauts et de décollement du feuil de peinture après que la pièce a été soumise à un nettoyeur haute pression lorsque la teneur en alcool est de 3% (ligne 1). Dans cette dernière condition, on constate également une pollution de la chaîne de peinture.

Le tableau 4 montre l'incidence du pH de la solution d'extraction sur l'aspect de pièces pour automobile. Ces données d'aspect représentent la synthèse des valeurs obtenues sur plusieurs centaines de pièces pour automobile en polypropylène. Toutes les mesures de données d'aspect ont été effectuées selon les méthodes précédemment décrites.

**Tableau 4**

| **Matériau** | **Brillant** (pourcentage de lumière réfléchie sous angle incident de 20°) | **Nombre de défauts** (grains, loupes, particules) de surface inférieure à 1mm²/ m' | **Nettoyeur haute pression** | | **Décollement après test d'adhérence** | | | **Pollution de la chaîne de peinture** |
|---|---|---|---|---|---|---|---|---|
| | | | **Surface totale décollée sur l'ensemble des 5 croix** (cm²) | **Plus grande surface décollée sur une croix** (cm²) | **Etat initial** | **Immersion dans l'eau** | **Exposition à la chaleur** | |
| 30 % de polypropylène recyclé - pH=1,5 | 65 à 90 | ≤4 | <2 | ≤1 | non | non | non | non |
| 30 % de polypropylène recyclé - pH=2 | 65 à 90 | ≤4 | <2 | ≤1 | non | non | non | non |
| 30 % de polypropylène recyclé - pH=4 | 65 à 90 | ≤4 | <2 | ≤1 | non | non | non | non |
| 30 % de polypropylène recyclé - pH=5 | 65 à 90 | ≤4 | <2 | ≤1 | non | non | non | non |
| 30 % de polypropylène recyclé - pH=5.5 | 65 à 90 | 5 à 6 | 2 à 3 | 1,5 | non | non | non | non |

Les données d'aspect de pièces pour automobile comprenant 30 % de polypropylène recyclé ont été recensées. Les données sont différentes en fonction du pH de la solution d'extraction. En effet en lignes 1 à 3, à un pH égal respectivement à 2, 4 et 5, les exigences d'aspect sont atteintes. En revanche, elles ne sont pas atteintes en matière de densité de défauts et de décollement du feuil de peinture après que la pièce a été soumise à un nettoyeur haute pression lorsque le pH est égal à 5,5 (ligne 4).

L'invention sera mieux comprise à la lecture de la description qui va suivre, donnée uniquement à titre d'exemple.
- la figure 1 est une vue schématique d'une installation classique de recyclage de polymères ;
- la figure 2 est une vue avant en perspective d'un pare-chocs avant de véhicule automobile ;
- la figure 3 est une vue avant en perspective d'un pare-chocs avant de véhicule automobile ;
- la figure 4 est une vue avant en perspective d'un pare-chocs arrière de véhicule automobile.

Les figures 5 à 7 sont des représentations de défauts d'aspect.

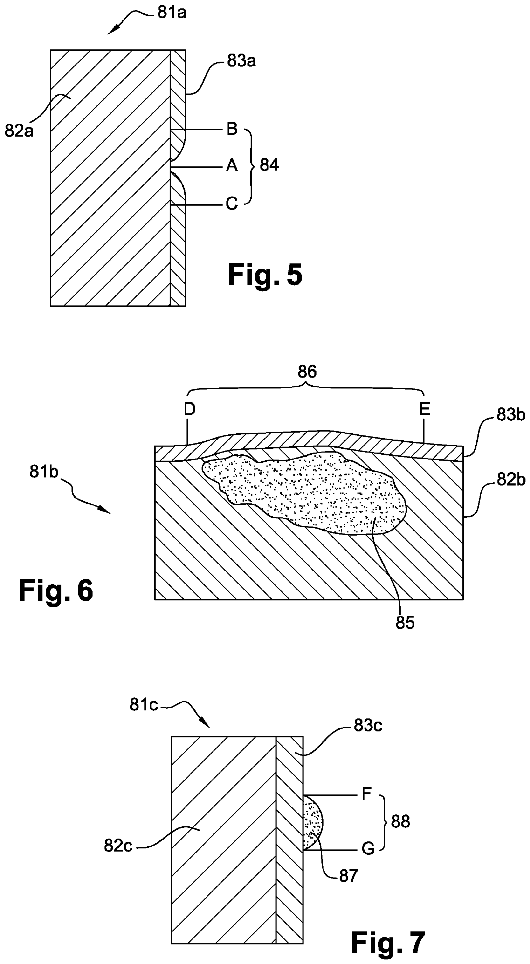

- La figure 5 est une vue en coupe agrandie d'un défaut de type loupe.
- La figure 6 est une vue en coupe agrandie d'un défaut de type particule.
- La figure 7 est une vue en coupe agrandie d'un défaut de type grain.

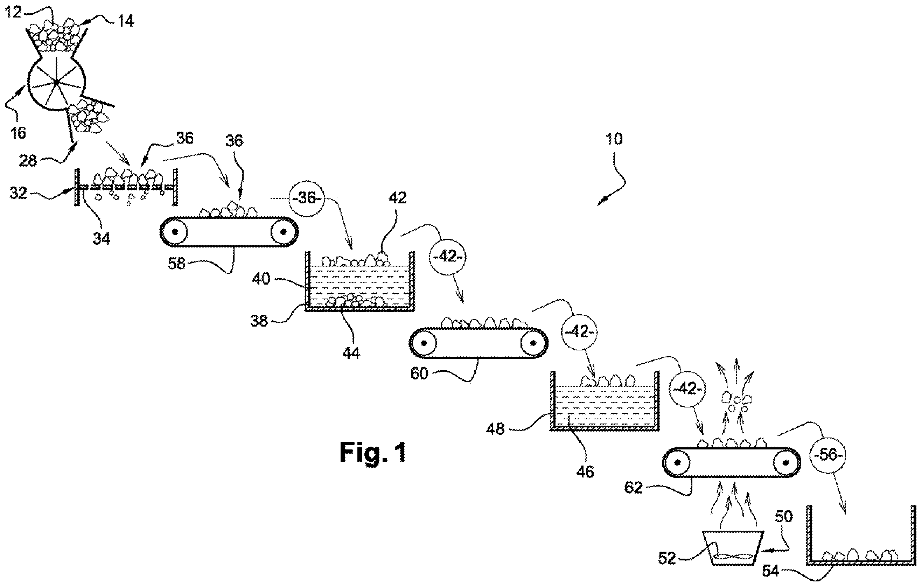

On a représenté sur la figure 1, une installation classique de recyclage de polymères représentant les étapes de recyclage après lesquelles le procédé d'extraction selon l'invention peut être mis en oeuvre. L'installation est désignée par la référence générale 10.

L'installation 10 est destinée à récupérer des fragments de polyéthylène et de polypropylène dans du déchiqueté de matériaux post-consommateurs 12. Dans l'exemple décrit, le déchiqueté de matériaux post-consommateurs 12 provient d'un véhicule automobile.

Un déchiqueté d'un véhicule automobile est un mélange d'éléments déchiquetés d'un véhicule automobile, une fois que la batterie, les pneus, le métal, ont été récupérés.

En général, le déchiqueté de matériaux post-consommateurs 12 comprend des fragments 14 de matériaux métalliques, de matériaux minéraux, de matériaux polymères et de bois.

Généralement, les fragments de bois ont une densité inférieure à 1 en raison de la structure du bois comprenant des espaces vides remplis de gaz.

Par ailleurs, le déchiqueté de matériaux post-consommateurs 12 peut encore comprendre des fragments de matériaux métalliques tels que du cuivre, ce matériau ayant également une densité supérieure à 1.

Afin de séparer les fragments de polyéthylène et de polypropylène des autres fragments, l'installation 10 comprend un broyeur à marteaux 16.

Le broyage du déchiqueté de matériaux aboutit à un broyé de matériaux 28. Dans ce broyé, l'essentiel des fragments de polypropylène et de polyéthylène a des dimensions supérieures à 80 mm tandis que les autres fragments ont des dimensions bien inférieures à 80 mm.

Afin de séparer les fragments de polyéthylène et de polypropylène d'un premier broyé 28, l'installation 10 comprend également un dispositif de criblage 32 destiné au criblage du premier broyé 28.

Le dispositif de criblage 32 comprend un tamis 34 dont la maille a un motif élémentaire de dimension égale à 80 mm de manière à récupérer un deuxième broyé 36, comprenant essentiellement les fragments de polyéthylène et de polypropylène de dimensions supérieures à 80mm, et éliminer des fragments résiduels de dimensions inférieures à 80 mm.

Le deuxième broyé 36 comprend éventuellement des fragments de bois et de polymères résiduels.

Afin d'éliminer les fragments résiduels de bois du deuxième broyé 36 par densification, l'installation 10 comprend un premier récipient 38 contenant un milieu liquide 40 comprenant une solution basique.

Cette solution basique est destinée notamment à densifier le bois par hydrolyse.

Le récipient 38 contenant le liquide 40 permet la séparation d'une partie surnageante formant un troisième broyé 42 d'une partie 44, qui coule, contenant les fragments de bois densifiés ainsi que d'autres fragments de matériaux lourds résiduels tels que par exemple les polyéthylène et polypropylène.

L'installation 10 comprend également un deuxième récipient 46 contenant un milieu liquide 48, pour le nettoyage des fragments du troisième broyé 42 obtenu précédemment.

Par ailleurs, afin d'éliminer les fragments de mousse et récupérer les fragments de polyéthylène et de polypropylène dans le troisième broyé 42, l'installation 10 comprend encore des moyens 50 de séparation par ventilation.

Les moyens de séparation par ventilation 50 comprennent des ventilateurs 52.

L'installation 10 comprend encore un troisième récipient 54 de récupération d'un quatrième broyé 56 comprenant au moins les fragments de polyéthylène et de polypropylène et dans lequel les fragments de mousse ont été éliminés.

Afin d'acheminer le broyé vers les récipients 38, 46 et 54, l'installation 10 comprend également :
- un tapis roulant 58 amont destiné à acheminer le deuxième broyé 36 vers le premier récipient,
- un tapis roulant 60 intermédiaire destiné à acheminer le troisième broyé 42 vers le deuxième récipient 46, et
- un tapis roulant 62 aval destiné à acheminer le quatrième broyé 56 vers le troisième récipient 54.

Le procédé d'extraction selon l'invention est appliqué préférentiellement au quatrième broyé 56. Il peut également être appliqué aux broyés 28, 36 et 42. Il peut aussi être appliqué à des broyés issus d'une installation de recyclage comprenant des variantes des équipements décrits en référence à la figure 1. Certains équipements peuvent être supprimés et l'ordre de ces équipements peut être modifié.

Dans un mode de réalisation du procédé, le broyé est mis en contact avec la solution d'extraction pendant 15 minutes, sous agitation afin d'homogénéiser la température entre les phases liquide et solide. Le broyé est ensuite séché par centrifugation. Le procédé d'extraction peut être répété dans plusieurs cuves successives.

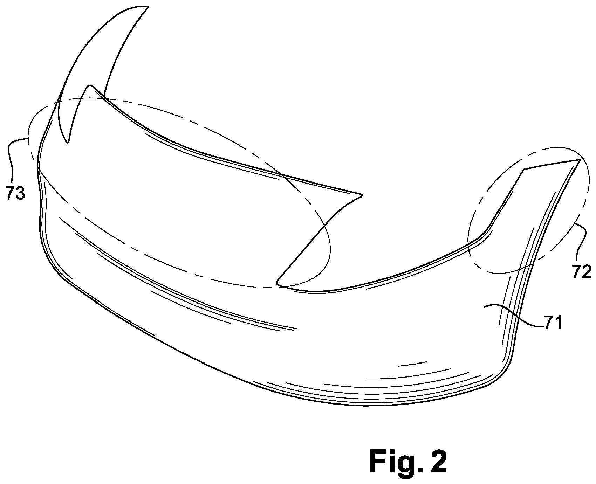

La figure 2 est une vue en perspective d'un pare-chocs avant 71 de véhicule automobile. Les zones 72 et 73 correspondent aux zones d'aspect du pare-chocs 71.

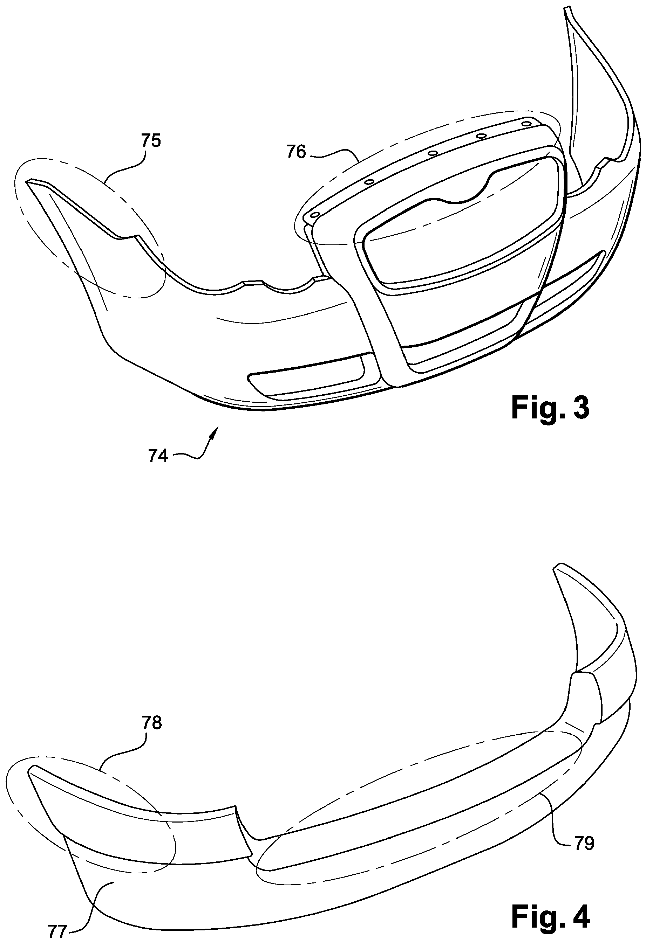

La figure 3 est une vue en perspective d'un pare-chocs avant 74 de véhicule automobile. Les zones 75 et 76 correspondent aux zones d'aspect du pare-chocs 74.

La figure 4 est une vue en perspective d'un pare-chocs arrière 77 de véhicule automobile. Les zones 78 et 79 correspondent aux zones d'aspect du pare-chocs 77.

La figure 5 est une vue en coupe agrandie à l'échelle 30:1 d'une partie extérieure d'une pièce de carrosserie peinte 81a constituée d'un subjectile 82a et d'un feuil de peinture 83a. L'épaisseur du feuil de peinture 83a varie entre les points B et C au niveau desquels elle est égale à 100 µm. Elle est égale à 0 µm au point A. En revanche, à l'extérieur du segment [BC], l'épaisseur du feuil est constante. La partie du feuil de peinture située entre les points B et C, s'étendant sur une longueur de 0,6 mm, est une représentation schématique d'un défaut de type loupe 84.

La figure 6 montre une vue en coupe agrandie à l'échelle 30:1 d'une partie extérieure d'une pièce de carrosserie peinte 81b constituée d'un subjectile 82b et d'un feuil de peinture 83b. Le subjectile 82b de cette figure, contrairement à celui de la figure 5, n'a pas une surface rectiligne. Sa surface apparaît bombée dans la partie s'étendant du point D au point E située au droit d'une impureté 85. La partie du feuil de peinture s'étendant du point E au point F, sur une longueur de 1,8 mm, est déformée. Il s'agit d'une représentation schématique d'un défaut de type particule 6.

La figure 7 montre une vue en coupe agrandie à l'échelle 75:1 d'une partie extérieure d'une pièce de carrosserie peinte 81c constituée d'un subjectile 82c et d'un feuil de peinture 83c. Le feuil de peinture a une épaisseur constante de 93 µm. Une poussière 87 est déposée sur la dernière couche du feuil de peinture. Ce défaut, s'étendant des points F à G sur une longueur de 0,2 mm, est une représentation schématique d'un défaut de type grain 8. Les autres causes de défaut de type grain, à savoir la présence d'une poussière à la surface du subjectile ou entre deux couches successives du feuil de peinture, créant un défaut d'aspect par déformation du feuil de peinture, ne sont pas représentés.

L'invention ne se limite pas aux modes de réalisation décrits précédemment.

En effet, les composés organiques volatils pourront être extraits grâce à l'emploi d'un autre agent mouillant et d'un autre agent de solubilisation des esters d'acides gras.

Egalement, le procédé de recyclage pourra être employé dans la fabrication d'autres pièces que des pièces de carrosserie pour véhicule automobile et même des pièces destinées à d'autres domaines que celui de l'automobile.

Enfin, le procédé de recyclage pourra être appliqué à d'autres polymères que le polypropylène.

## Revendications

1. Procédé de recyclage de polymères à partir d'un broyé de matériaux « postconsommateur » pour fournir des pièces pour des véhicules automobiles présentant, après revêtement par de la peinture, les exigences d'aspect suivantes :
- brillant compris sous angle incident de 20° entre 65 et 90 % de lumière réfléchie,
- au maximum 4 défauts de type grains, loupes, ou particules au m², d'une taille supérieure à 50 µm,
- une tenue aux agressions extérieures définie par aucun décollement après test d'adhérence dans chacune des conditions suivantes :
à l'état initial,
après que la pièce a été immergée dans de l'eau déminéralisée à 40°C pendant 10 jours ou 60°C pendant 3 jours, le test de tenue aux agressions extérieures étant effectué 1 heure après avoir sorti et essuyé la pièce,
et après exposition à une température de 85 °C pendant 7 jours, le test de tenue aux agressions extérieures étant effectué après retour à température ambiante, et
- un décollement du feuil de peinture inférieur à 2 cm² sur l'ensemble de la pièce, après que la pièce a subi un minimum de cinq incisions jusqu'au subjectile en forme de croix inscrite chacune dans un carré de 10 cm de côté et a ensuite été soumise pendant 30 secondes à un jet d'eau à 85°C émis sous une pression de 65 bars par une buse à jet plat d'un nettoyeur haute pression située à 10 cm de la pièce, le décollement de chaque croix ne devant pas excéder 1 cm²,
les pièces étant constituées de polymères dont certains sont issus d'un broyé de matériaux « postconsommateur », le pourcentage en masse de polymères issus d'un broyé de matériaux « postconsommateur » étant supérieur ou égal à 30, ou préférentiellement supérieur ou égal à 50, ou encore plus préférentiellement égal à 100,
procédé comportant une étape d'extraction des composés organiques volatils présents au coeur des polymères, **caractérisé en ce que** l'extraction des composés organiques volatils est effectuée par mise en contact du broyé avec une solution comportant au moins un agent mouillant et un agent de solubilisation des esters d'acide gras, sous une température entre 15 °C et 5°C en-dessous du point d'ébullition de la solution, procédé dans lequel l'agent de solubilisation des esters d'acide gras est un acide ajouté à la solution pour qu'elle ait un pH supérieur ou égal à 2 et inférieur ou égal à 5, ou préférentiellement inclus entre 4 et 5.

2. Procédé de recyclage selon la revendication précédente, dans lequel l'agent mouillant est un alcool.

3. Procédé de recyclage selon la revendication précédente, dans lequel l'agent mouillant est un alcool aliphatique en C1 à C5, ou préférentiellement en C1 à C3, ou encore plus préférentiellement un alcool dénaturé contenant un mélange d'alcools en C1, C2 et C3.

4. Procédé de recyclage selon l'une quelconque des revendications 2 à 3, dans lequel la teneur en alcool de la solution est comprise entre 4 et 25 % en volume.

5. Procédé de recyclage selon la revendication 1, dans lequel l'acide est choisi parmi le groupe des acides minéraux, ou préférentiellement est de l'acide chlorhydrique ou de l'acide sulfurique.

6. Procédé de recyclage selon l'une quelconque des revendications précédentes, dans lequel les fragments du broyé sont d'épaisseur inférieure à 5 mm et ont une surface comprise entre 1 et 4 cm².

7. Procédé de recyclage selon l'une quelconque des revendications précédentes, dans lequel les composés organiques volatils à extraire sont des molécules de masse molaire inférieure à 400 g/mol.

8. Procédé selon l'une quelconque des revendications précédentes, dans lequel les polymères à recycler sont des polyoléfines (homopolymères ou copolymères d'oléfines), et de façon préférentielle du polypropylène.

9. Procédé de recyclage selon l'une quelconque des revendications précédentes, dans lequel l'extraction est effectuée sous pression atmosphérique.

10. Procédé de recyclage selon l'une quelconque des revendications précédentes, dans lequel la solution est à l'état liquide.

11. Procédé de recyclage selon l'une quelconque des revendications 1 à 10, dans lequel le polymère issu du procédé est le même que le polymère contenu dans le matériau « postconsommateur » soumis audit procédé.

12. Matériau issu du procédé selon l'une quelconque des revendications précédentes.

13. Pièce fabriquée dans un matériau selon la revendication précédente.

## Patentansprüche

1. Verfahren zum Recycling von Polymeren aus zerkleinerten "Post-Consumer"-Werkstoffen, um Teile für Kraftfahrzeuge bereitzustellen, die nach Beschichtung durch Lack die folgenden Anforderungen an das Aussehen aufweisen:
- Glanz bei einem Einfallwinkel von 20° zwischen 65 und 90 % des reflektierten Lichts,
- höchstens 4 Fehler des Typs Narben, Bläschen oder Partikel pro m², mit einer Größe über 50 µm,
- eine Widerstandsfähigkeit gegenüber äußeren Einwirkungen, die durch keinerlei Ablösung nach der Haftfestigkeits-Prüfung unter jeder der folgenden Bedingungen definiert ist:
im Ausgangszustand,
nachdem das Teil in demineralisiertes Wasser mit 40 °C über einen Zeitraum von 10 Tagen oder mit 60 °C über einen Zeitraum von 3 Tagen getaucht wurde, wobei die Prüfung hinsichtlich der Widerstandsfähigkeit gegenüber äußeren Einwirkungen 1 Stunde, nachdem das Teil herausgenommen und abgewischt wurde, durchgeführt wird,
und nachdem es einer Temperatur von 85 °C über einen Zeitraum von 7 Tagen ausgesetzt wurde, wobei die Prüfung hinsichtlich der Widerstandsfähigkeit gegenüber äußeren Einwirkungen nach Rückkehr zur Umgebungstemperatur durchgeführt wird, und
- eine Ablösung der Lackschicht kleiner als 2 cm² über das gesamte Teil, nachdem das Teil mindestens fünf Einschnitten bis auf den Untergrund in Form eines Kreuzes unterzogen wurde, die jedes in einem Quadrat mit 10 cm Seitenlänge eingeschnitten wurden, und anschließend über einen Zeitraum von 30 Sekunden einem Wasserstrahl mit 85 °C ausgesetzt wurde, der mit einem Druck von 65 bar von einer Flachstrahldüse eines Hochdruckreinigers 10 cm von dem Teil entfernt abgestrahlt wurde, wobei die Ablösung jedes Kreuzes 1 cm² nicht überschreiten darf,
wobei die Teile aus Polymeren bestehen, von denen bestimmte aus einer Zerkleinerung von "Post-Consumer"-Werkstoffen stammen, wobei der prozentuale Masseanteil von Polymeren, die aus einer Zerkleinerung von "Post-Consumer"-Werkstoffen stammen, größer oder gleich 30 oder vorzugsweise größer oder gleich 50 oder weiter bevorzugt gleich 100 beträgt,
wobei das Verfahren einen Schritt des Extrahierens der flüchtigen organischen Verbindungen aufweist, die im Kern der Polymere vorhanden sind, **dadurch gekennzeichnet, dass** das Extrahieren der flüchtigen organischen Verbindungen durch Inkontaktbringen der Zerkleinerung mit einer Lösung mit mindestens einem Netzmittel und einem Mittel zur Solubilisierung der Fettsäureester bei einer Temperatur zwischen 15 °C und 25 °C unterhalb des Siedepunktes der Lösung erfolgt, wobei bei dem Verfahren das Mittel zur Solubilisierung der Fettsäureester eine Säure ist, die der Lösung zugegeben wird, damit sie einen pH-Wert größer oder gleich 2 und kleiner oder gleich 5 und vorzugsweise zwischen 4 und 5 hat.

2. Recycling-Verfahren nach dem vorhergehenden Anspruch, wobei das Netzmittel ein Alkohol ist.

3. Recycling-Verfahren nach dem vorhergehenden Anspruch, wobei das Netzmittel ein aliphatischer C1- bis C5-Alkohol oder vorzugsweise ein C1- bis C3-Alkohol oder weiter bevorzugt ein denaturierter Alkohol ist, der ein Gemisch aus C1-, C2- und C3-Alkoholen enthält.

4. Recycling-Verfahren nach einem der Ansprüche 2 bis 3, wobei der Alkoholgehalt der Lösung zwischen 4 und 25 Volumen-% beträgt.

5. Recycling-Verfahren nach Anspruch 1, wobei die Säure aus der Gruppe der Mineralsäuren ausgewählt ist oder vorzugsweise Chlorwasserstoffsäure oder Schwefelsäure ist.

6. Recycling-Verfahren nach einem der vorhergehenden Ansprüche, wobei die Fragmente der Zerkleinerung eine Dicke kleiner als 5 mm haben und eine Oberfläche zwischen 1 und 4 cm² haben.

7. Recycling-Verfahren nach einem der vorhergehenden Ansprüche, wobei die zu extrahierenden flüchtigen organischen Verbindungen Moleküle mit einer Molmasse kleiner als 400 g/mol sind.

8. Verfahren nach einem der vorhergehenden Ansprüche, wobei die zu recycelnden Polymere Polyolefine (Olefin-Homopolymere oder -Copolymere) sind, und vorzugsweise Polypropylen.

9. Recycling-Verfahren nach einem der vorhergehenden Ansprüche, wobei das Extrahieren unter atmosphärischem Druck erfolgt.

10. Recycling-Verfahren nach einem der vorhergehenden Ansprüche, wobei die Lösung in flüssigem Zustand ist.

11. Recycling-Verfahren nach einem der Ansprüche 1 bis 10, wobei das aus dem Verfahren hervorgegangene Polymer das gleiche ist, wie das, das in dem "Post-Consumer"-Werkstoff enthalten ist, der dem Verfahren unterzogen wird.

12. Werkstoff, der aus dem Verfahren nach einem der vorhergehenden Ansprüche hervorgegangen ist.

13. Teil, das aus einem Werkstoff nach dem vorhergehenden Anspruch hergestellt ist.

## Claims

1. Process for recycling of polymers from crushed "post-consumer" materials to supply parts for motor vehicles having, after coating with paint, the following appearance requirements:
- gloss under incident angle of 20° of between 65 % and 90 % reflected light,
- a maximum of 4 faults of type grains, craters, or particles per m², of size greater than 50 µm,
- resistance to external aggression defined by no peeling after adhesion test under each of the following conditions:
in the initial state,
after the part has been immersed in demineralised water at 40 °C for 10 days or 60 °C for 3 days, the resistance to external aggression test being carried out 1 hour after taking out and wiping the part,
and after exposure at a temperature of 85 °C for 7 days, the resistance to external aggression test being carried out after cooling to room temperature, and
- peeling of the paint film less than 2 cm² over the entire part, after the part has been given at least five X-cuts down to the substrate each inside a square of side 10 cm and has then been subjected for 30 seconds to a water jet at 85 °C at a pressure of 65 bar from a flat nozzle of a high-pressure cleaner positioned 10 cm from the part, the peeling of each cross not exceeding 1 cm²,
the parts being made of polymers, some of which are obtained from ground "post-consumer" materials, the percentage by weight of polymers obtained from ground "post-consumer" materials being greater than or equal to 30, or preferably greater than or equal to 50, or still more preferably equal to 100,
process comprising a step for extracting volatile organic compounds present within the polymers, **characterised in that** the volatile organic compounds are extracted by contacting the ground material with a solution comprising at least a wetting agent and an agent for solubilising fatty acid esters, at a temperature between 15 °C and 5 °C below the boiling point of the solution, process in which the agent for solubilising the fatty acid esters is an acid added to the solution so that the solution pH is greater than or equal to 2 and less than or equal to 5, or preferably between 4 and 5.

2. Process for recycling according to the preceding claim, wherein the wetting agent is an alcohol.

3. Process for recycling according to the preceding claim, wherein the wetting agent is a C1-C5 aliphatic alcohol, or preferably C1-C3, or even more preferably a denatured alcohol containing a mixture of C1, C2 and C3 alcohols.

4. Process for recycling according to claim 2 or 3, wherein the alcohol content of the solution is between 4 % and 25 % by volume.

5. Process for recycling according to claim 1, wherein the acid is selected from the group of mineral acids, or preferably is hydrochloric acid or sulphuric acid.

6. Process for recycling according to any one of the preceding claims, wherein the fragments of the ground material have a thickness of less than 5 mm and have a surface area of between 1 and 4 cm².

7. Process for recycling according to any one of the preceding claims, wherein the volatile organic compounds to be extracted are molecules of molar mass less than 400 g/mol.

8. Process according to any one of the preceding claims, wherein the polymers to be recycled are polyolefins (homopolymers or copolymers of olefins), and preferably polypropylene.

9. Process for recycling according to any one of the preceding claims, wherein the extraction is carried out under atmospheric pressure.

10. Process for recycling according to any one of the preceding claims, wherein the solution is in liquid state.

11. Process for recycling according to any one of claims 1 to 10, wherein the polymer resulting from the process is the same as the polymer contained in the "post-consumer" material subjected to said process.

12. Material obtained from the process according to any one of the preceding claims.

13. Part manufactured in a material according to the preceding claim.
